# EUROPEAN PATENT SPECIFICATION

(11) **EP 0 311 405 B1**
(45) Date of publication and mention of the grant of the patent: **21.12.1994**
(21) Application number: 88309329.6
(22) Date of filing: 06.10.1988
(51) Int. Cl.: G02F 1/137

(54) **A liquid-crystal display device**
Flüssigkristall-Anzeigevorrichtung
Dispositif d'affichage à cristal liquide

(30) Priority: 07.10.1987 JP 253278/87
(43) Date of publication of application: 12.04.1989
(73) Proprietor: SHARP KABUSHIKI KAISHA, Osaka 545 (JP)
(72) Inventor: Kimura, Naofumi, Nara-shi Nara-ken (JP)
(74) Representative: Huntingford, David Ian

(56) References cited:
- EP-A- 0 131 216
- EP-A- 0 284 372
- WO-A-82/03468
- GB-A- 2 065 321
- GB-A- 2 092 769
- PATENT ABSTRACTS OF JAPAN, vol. 6, no. 38 (P-105)[916], 9th March 1982 & JP A 56156816

## Description

This invention relates to a multi-layered-type liquid-crystal display device with the use of a twisted nematic display process that can produce a black-and-white display image and a colored display image with high contrast.

Liquid-crystal display devices are now being used in clocks and electronic calculating machines, in computer terminals, word processor displays, televisions, and a variety of other uses in many fields. Recently, there has been an extremely large demand for liquid-crystal display devices because of the changes to multicolor and full-color displays, which are already being made use of in the fields of graphic display and image display. Color displays that have been widely put into practical use are attained by a liquid-crystal cell with color filter layers. The liquid-crystal cell functions as a light-switcher, and produces various colors. The main kind of display mode is a twisted nematic (TN) display mode attained by a liquid-crystal cell in which the liquid-crystal molecules are twisted 90° so that high contrast, etc., can be obtained. However, with this TN display mode, the dependence of the display characteristics on the wavelength of light is great, and it is not possible to achieve switching of light uniformly over the entire spectrum of visible light. In particular, with the normally closed display process in which the axes of absorbance of the two polarizers are in parallel, there is the problem that light leakages at the time of the application of zero voltage gives rise to color.

With a color display device that causes light-switching by the use of a TN display that has this kind of a color filter layer, there are two main kinds of driving methods. One of them involves the active-matrix drive method that uses a liquid-crystal cell that has picture elements provided with non-linear devices such as diodes or switching elements such as thin-film transistors. The other method involves the multiplex drive method in which the liquid crystals of a liquid-crystal cell without picture elements are successively driven. With the latter method, the steepness in the vicinity of the threshold value of the optical charactetistics of the liquid crystals is important; this is a problem with the TN displays that are being used now. In order to improve the optical characteristics so that steepness in the vicinity of the threshold value can be attained, there has been suggested a supertwisted birefringence effect (SBE) process that gives liquid-crystal molecules that are twisted at angles of around 180°-270°. With the SBE process, the curve in the vicinity of the threshold value increases sharply, and even when the duty ratio increases, it is possible to obtain a high contrast ratio. However, because birefringence effects of liquid crystals are used, the dependence of the display characteristics on the wavelength is theoretically higher than with the TN display, so it is very difficult to adapt it for use in a full-color display.

It is an object of the present invention to provide a liquid-crystal display device which overcomes the above-discussed and other disadvantages and deficiencies of the prior art.

There is known from prior UK Application GB-A-2092769 a positive type liquid crystal display device comprising a liquid crystal cell that has first and second cell layers which contain therein liquid-crystal molecules having respective twisted nematic orientations, the liquid crystal molecules of the first cell layer having an angle of twist which is opposite to the angle of twist of the liquid crystal molecules in the second cell layer, respective orientation layers associated with said first and second cell layers, and a voltage applying means which is operatively connected to said first cell layer for applying a voltage for varying the orientation of the liquid crystal molecules in the first cell layer, the twisted orientation of the liquid crystal molecules in the second cell layer being unaffected by the voltage applying means.

There is also known from EP-A-0131216 a single layer twisted nematic liquid crystal display device with twist angles in the range 180°-360° wherein a polarizing condition of light entering a cell layer is determined by setting the polarizing axis of a polarizing plate, thereby to attain a major change of the optical characteristics.

In accordance with the present invention, there is provided a positive-type liquid-crystal display device comprising:
a multi-layered-type liquid-crystal cell that includes first and second cell layers, the cell layers containing liquid-crystal molecules having a twisted nematic orientation therein;
the first cell layer including a pair of transparent substrates opposing each other, a first pair of orientation films disposed on the inner surfaces of the transparent substrates, the liquid-crystal molecules of the first cell layer, having a twisted nematic orientation therein, being provided between the first pair of the orientation films, and a voltage-applying means which can vary the direction of the long molecular axis of each of the liquid-crystal molecules of the first cell layer;
the second cell layer including a pair of transparent substrates opposing each other, and a second pair of orientation films disposed on the inner surfaces of the latter transparent substrates, the liquid-crystal molecules of the second cell layer, having a twisted nematic orientation therein, being provided between the second pair of the orientation films; and wherein
the direction of twist of the liquid-crystal molecules in the first cell layer is the reverse of the direction of twist of the liquid-crystal molecules in the second cell layer;
the angle of the twist of the liquid-crystal molecules in the first cell layer and the angle of the twist of the liquid-crystal molecules in the second cell layer are both in the range of 180° to 360°; and
the angle formed between the orientation direction, in the direction of the surface of the orientation film, of the longer axes of the liquid-crystal molecules which are nearest to the surface of that orientation film of the first cell layer which is nearest to the second cell layer and the orientation direction, along the direction of the surface of the orientation film, of the longer axes of the liquid-crystal molecules which are nearest to the surface of that orientation film of the second cell layer which is nearest to the first cell layer, lies between 70° and 80° or between 110° and 150°.

In a preferred embodiment, said angle between the orientation directions lies between 120° and 150°.

In a preferred embodiment, the angles of twist of the liquid-crystal molecules in the first and second cell layers are nearly equal to each other, and the product Δn₁·d₁ of the birefringence Δn₁ and the thickness d₁ of the liquid-crystal layer in the first cell layer and the product Δn₂·d₂ of the birefringence Δn₂ and the thickness d₂ of the liquid-crystal layer in the second cell layer are represented by the following inequality:$\text{0.7·Δn₂·d₂ < Δn₁·d₁ <1.4·Δn₂·d₂}$

In a preferred embodiment, the relationship between the pitch p of twist of the liquid-crystal molecules in the first cell layer and the thickness d of the liquid-crystal layer in the first cell layer is as follows:$\text{ϑ/2π - 1/4 < d/p ≲ ϑ/2π,}$
wherein ϑ is the angle of twist of the liquid-crystal molecules.

In a preferred embodiment, a colour filter layer is disposed in at least one of the first and second cell layers.

In a preferred embodiment, the first cell layer contains picture elements wherein and an active device is disposed on each said picture element.

Thus, the invention described herein makes possible the provision of (1) a positive-type liquid-crystal display device that produces a black-and-white display image and a coloured display image with superior colour reproducibility and high contrast; and (2) a positive-type liquid-crystal display device that attains a full-colour display or a multi-colour display.

The invention is described further hereinafter, by way of example only, with reference to the accompanying drawings, in which:-
Figure 1 is a sectional view showing the fundamental cell structure of a multi-layered-type liquid-crystal display device of this invention;
Figures 2a and 2b, respectively, are diagrams showing twists of liquid-crystal molecules in the right and left hand directions;
Figure 3 is of a characteristic curve showing the relationship between the angle of the orientation of the liquid-crystal molecules in the first cell layer in the vicinity of the second cell layer to the orientation of the liquid-crystal molecules in the second cell layer in the vicinity of the first cell layer and the contrast ratio;
Figure 4 is a characteristic curve showing the relationship between the angle of twist of liquid-crystal molecules and the contrast ratio of display images.
Figure 5 is of a characteristic curve showing the relationship between the value of Δn₁·d₁/Δn₂·d₂ and the contrast ratio ;
Figure 6a is of characteristic curves showing the relationship between the applied voltage and the light transmittance with regard to the display device of Figure 1 of this invention ;
Figure 6b is of a characteristic curves showing the relationship between the applied voltage and the light transmittance with regard to a single-layered type TN-LCD ;
Figure 7a is of characteristic curves showing the relationship between the applied voltage and the light transmittance with regard to another multi-layered display device of this invention ; and
Figure 7b is of characteristic curves showing the relationship between the applied voltage and the light transmittance with regard to another single-layered type TN-LCD.

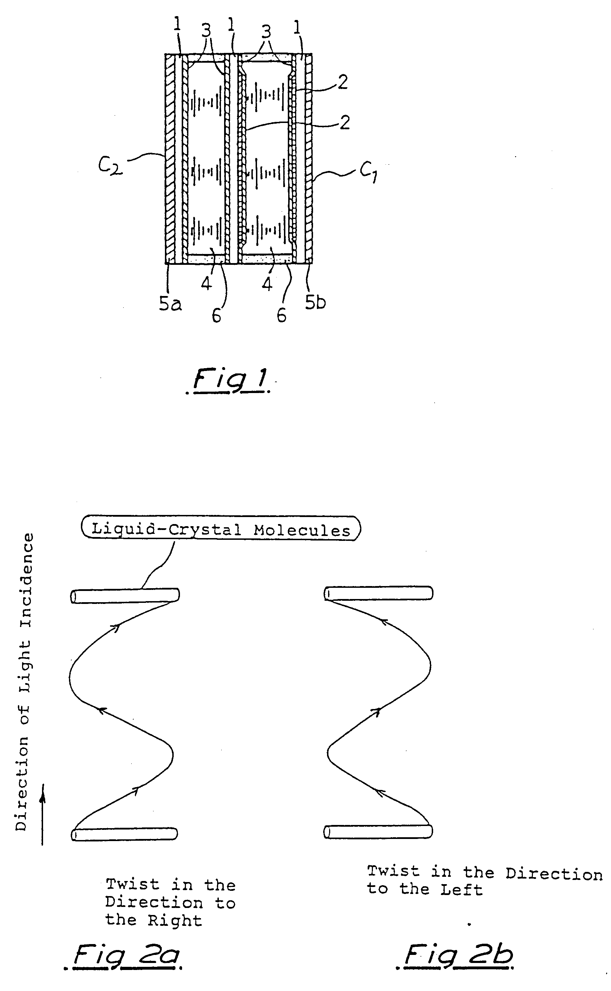

This invention provides a liquid-crystal display device, the fundamental double-layered cell structure of which is, as shown in Figure 1, composed of a first cell layer C₁ and a second cell layer C₂ that contains liquid-crystal molecules therein with a twisted nematic orientation. The first cell layer C₁ comprises transparent substrates 1 of glass, acrylic resins, or the like, transparent conductive films 2 of ITO, nesa film, or the like positioned on the substrates 1, and orientation films 3 of inorganic film made of Si0₂, Si0, or the like or an organic film made of polyimide, polyvinyl alcohol, nylon, acrylic resins, or the like for the orientation of liquid-crystal molecules positioned on the substrates 1 and the transparent conductive films 2. A polarizer 5a is positioned on the back face of the substrate 1 of the second cell layer C₂ and a detector 5b is positioned on the back face of the substrate 1 of the first cell layer C₁. Both ends of each cell layer are sealed by sealing substances 6. A liquid-crystal layer 4 is disposed in each of the cell layers C₁ and C₂. The second cell layer C₂ is essentially the same as the cell layer C₁ except that it does not have the transparent conductive films 2.

The direction in which the liquid-crystal molecules of the liquid-crystal layer 4 in one cell layer are helically twisted is opposite to the direction of twist of the liquid-crystal molecules of the liquid-crystal layer 4 in the other cell layer. The directions of twist of the liquid-crystal molecules are set as shown in Figures 2a and 2b in which Figure 2a shows the twist of the liquid-crystal molecules in the right hand direction with regard to the direction in which light from a light source is incident upon the cell and Figure 2b shows twist of the liquid-crystal molecules in the left hand direction with regard to the light incidence direction. When an optically active substance is added to a nematic liquid crystal, the liquid-crystal molecules form a twisted structure. To cause the liquid-crystal molecules to give rise to a twist in the right hand direction, the substance that is represented by the following chemical structure is used as an optically active substance 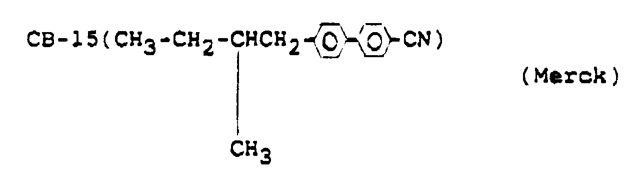
To cause the liquid-crystal molecules to give rise to a twist in the left hand direction, cholesteryl nonanoate (MERCK) , S-811 (Merck), etc., are used as optically active substances.

Voltage is applied to the liquid-crystal layer 4 of the first cell layer C₁ via the transparent conductive films 2, so that the orientation of the liquid-crystal molecules of the first cell layer C₁ can be changed. Because no transparent conductive films 2 are disposed on the liquid-crystal layer 4 of the second cell layer C₂, changes of the orientation of the liquid-crystal molecules of the second cell layer C₂ do not arise. The second cell layer C₂ functions as a compensator that makes the display pattern of the first cell layer C₁ distinct.

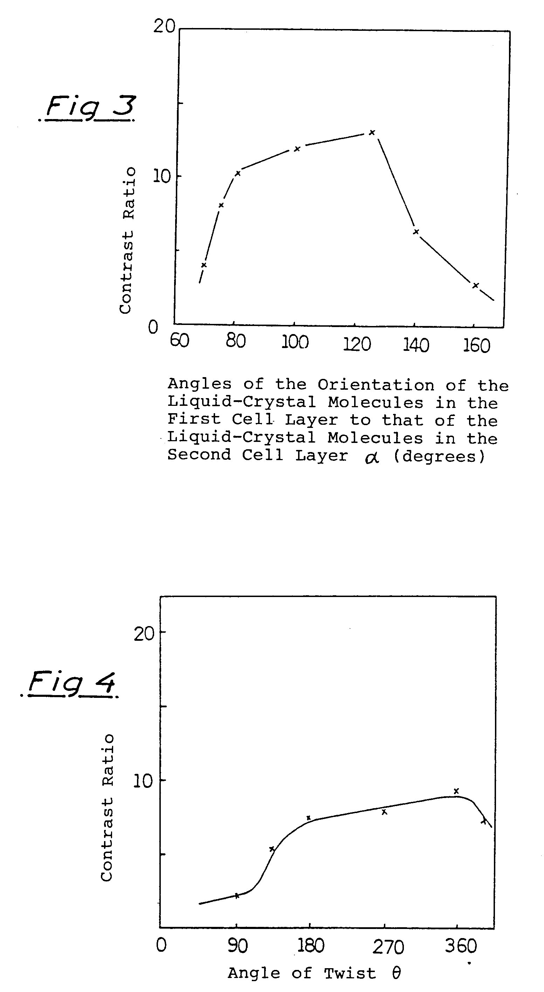

Figure 3 shows the relationship between the angles α of the orientation of the liquid-crystal molecules of the first cell layer C₁ nearest to the the second cell layer C₂ to the orientation of the liquid-crystal molecules of the second cell layer C₂ nearest to the first cell layer C₁ and the contrast ratio, wherein the angles ϑ₁ and ϑ₂ of twist of the liquid-crystal molecules of the liquid-crystal layers in the first and second cell layers C₁ and C₂ are set as follows: ϑ₁ = ϑ₂ = 270°, and the values Δn₁·d₁ and Δn₂·d₂ (Δn₁ and Δn₂ being the birefringence of the liquid crystals in the first and second cell layers, respectively, and d₁ and d₂ being the thicknesses of the Liquid-crystal layers in the first and second cell layers, respectively) of the liquid-crystal layers in the first and second cell layers are set as follows: Δn₁·d₁ = Δn₂·d₂ = 0.7. It can be seen from Figure 3 that the value of α should be set to be 70° to 150° in order to obtain a contrast ratio that is 1/2 times or more the maximum contrast ratio.

When the value of α is in the range of 70° to 80° or 100° to 150°, because of the birefringence of the liquid-crystal in the second cell layer, the first cell layer attains a high transmittance of light at the time of the application of zero voltage and attains a low transmittance of light at the time of the application of voltage; namely, the first cell layer attains a positive-type display. When the value of α is in the range of 80° to 100°, the first cell layer attains an opposite phenomenon, that is, a negative-type display.

Since it is desirable that reflection-type liquid-crystal display devices attain a positive-type display, the value of α should be set to be 70°-80° or 100°-150°. It is preferably set to be 120°-150° in view of the ease of manufacture thereof.

The liquid-crystal layers are constructed so that the following relationship can be satisfied because the maximum contrast ratio exists therein:$\text{0.7 < (Δn₁·d₁ · ϑ₂)/(Δn₂·d₂· ϑ₁) < 1.5}$

By considering the display contrast and the visibility, as shown in Figure 4, the angle of twist of the liquid-crystal molecules is set to be in the range of about 180° to about 360° based on the relationship between the angle of twist and the contrast ratio. If the angle of twist of the liquid-crystal molecules exceeds 360°, a domain appears in which the liquid crystals have their orientation disarrayed at the time of the application of voltage, resulting in a dispersion of light, which readily gives rise to a decrease in contrast.

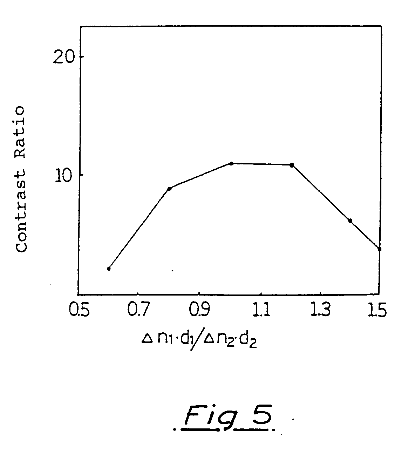

Figure 5 shows the relationship between the value of (Δn₁·d₁)/(Δn₂·d₂) and the contrast ratio, wherein α = 110° and ϑ₁ = ϑ₂ = 270°, indicating that the value of (Δn₁·d₁)/(Δn₂·d₂) should be set to be more than 0.7 and less than 1.4 (i.e., 0.7 < (Δn₁·d₁)/(Δn₂·d₂) < 1.4) in order to obtain a contrast ratio that is 1/2 times or more than the maximum contrast ratio. The absolute value of each of Δn₁, d₁, Δn₂, d₂ is preferably set to be in the range of 0.3 to 3.0.

When the liquid-crystal device is driven by the multiplex drive method, to obtain sharp threshold characteristics of contrast, the specific pitch p of the twist of liquid-crystal molecules in one cell layer with a voltage-applying means becomes very important. The ratio of the thickness d of the liquid-crystal layer to the pitch p of the twist of the liquid-crystal molecules, d/p, is preferably set by use of experimental data as follows:$\text{ϑ/2π - 1/4 < d/p ≲ ϑ/2π}$
wherein ϑ is the angle of twist of liquid-crystal molecules. This requirement applies in the case where the pretilt angle of the liquid crystals is about 10° or less.

### Example 1

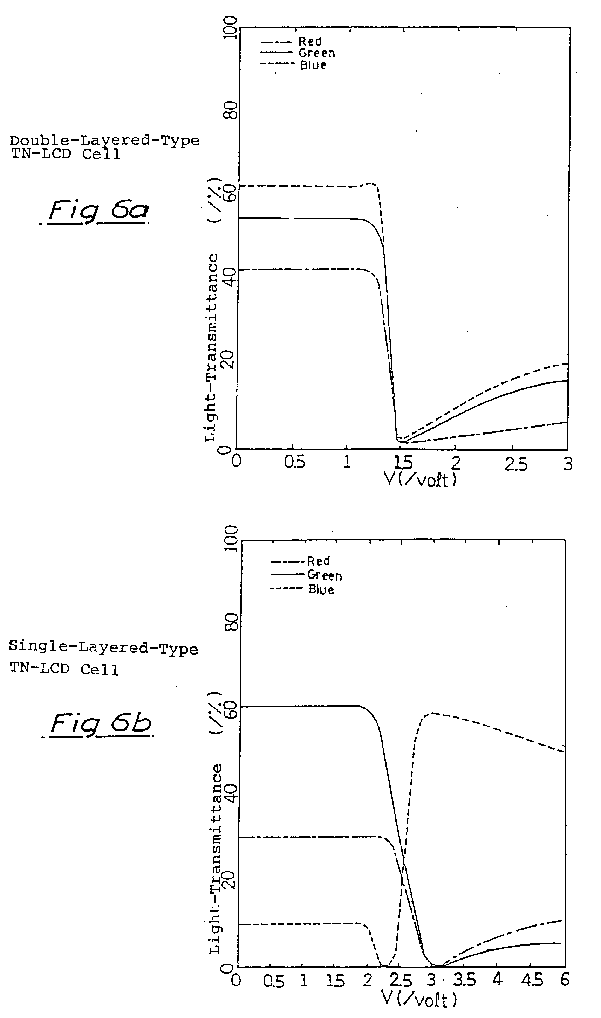

Figure 1 shows the double-layered cell structure of a liquid-crystal display device (i.e., a double-layered-type TN-LCD) of this invention, in which the transparent substrate 1 is made of glass. A transparent conductive film 2 with a thickness of about 1500 Å is disposed on each of the glass substrates 1 of the first cell layer C₁ alone by vapor deposition of ITO and patterned by an etching technique. On the glass substrates 1 and the transparent conductive films 2, liquid-crystal-molecule orientation films 3 of polyimide are formed with a thickness of about 1000 Å by a spin coating technique, the surfaces of which are treated by being rubbed with cloth, causing the liquid-crystal molecules to be in a twisted nematic orientation. The end portions of the cell layers are sealed by a sealing substrate 6. The value of α is set to be 135°. As a liquid-crystal substance, a nematic liquid crystal, ZLI-3281 (Merck), is used. To the liquid-crystal layer 4 of the first cell layer C₁, 0.94 wt% of CB15 is added and 1.1 wt% of cholesteryl nonanoate is added to the liquid-crystal layer 4 of the second cell layer C₂. The angle of twist of the liquid-crystal molecules in the first cell layer C₁ is opposite to that of the liquid-crystal molecules in the second cell layer C₂, wherein ϑ₁ = ϑ₂ = 270°. The thickness of the liquid-crystal layer in each of the first and second cell layers C₁ and C₂ (i.e., the thickness of each of the cell layers C₁ and C₂) is 5 µm, i.e., d₁ = d₂ = 5 µm. The value of P is about 8 µm. The pretilt angle of the liquid crystals on the substrates 1 is about 8°. The polarizer 5a and the detector 5b, which are made of an iodine-system polarizing board, are placed at an angle of about 45° therebetween. Figures 6a and 6b show the dependence of the light transmittance on the applied voltage with regard to the double-layered-type TN-LCD of this invention and a reference standard single-layered-type TN-LCD, respectively, wherein the wavelengths λ used herein for red color, green color, and blue color are 610 nm, 550 nm, and 450 nm, respectively, indicating that at the time of the application of a voltage near the threshold value, the transmittance of the wavelength for each color in the double-layered-type cell is lower than that of the wavelength for each color in the single-layered-type cell. This means that the double-layered-type cell can attain high contrast. Moreover, the dependence of the applied-voltage-transmittance characteristics on the wavelengths with regard to the double-layered-type cell is much smaller than that of the applied-voltage-transmittance characteristics on the wavelengths with regard to the single-layered-type cell, and thus, the double-layered-type cell can produce a distinct black-and-while display image of a positive-display type.

### Example 2

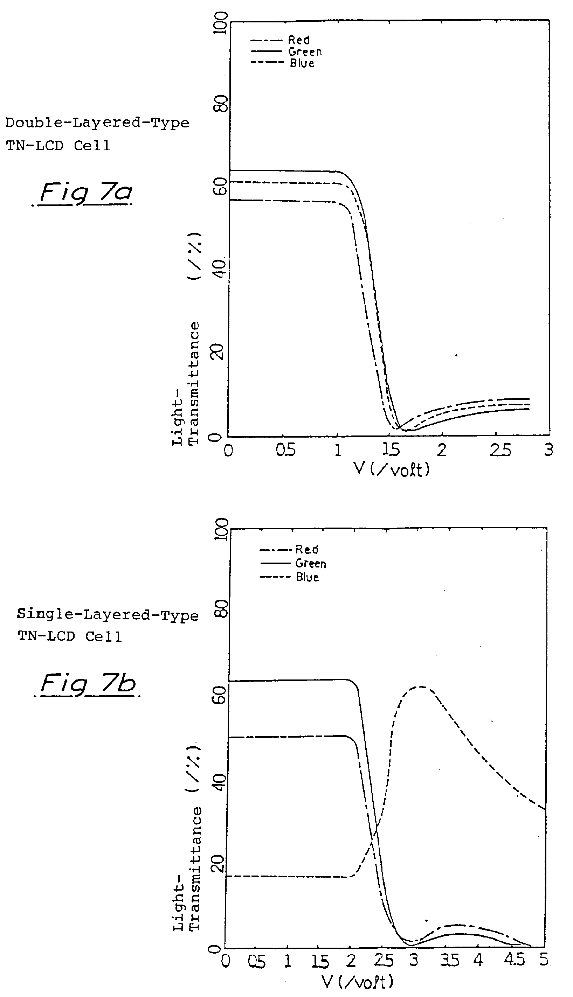

This example provides another liquid-crystal display device of this invention, which has the same structure as that of Example 1, except that 0.75 wt% of CB15 is added to the liquid-crystal layer 4 of the first cell layer C₁ and 0.84 wt% of cholesteryl nonanoate is added to the liquid-crystal layer 4 of the second cell layer C₂, and moreover the angles ϑ₁ and ϑ₂ of twist of the liquid-crystal molecules in the first and second cell layers C₁ and C₂ are set to the value of 240°, respectively (i.e., ϑ₁ = ϑ₂ =240°). Figure 7a shows the dependence of the light transmittance on the applied voltage with regard to the double-layered type TN-CLD of this invention and Figure 7b shows the same characteristics as mentioned above with regard to a reference standard single-layered-type TN-CLD, wherein the wavelengths λ examined herein are 610 nm for red, 550 nm for green, and 450 nm for blue. Figures 7a and 7b indicate that the transmittance characteristics of the wavelengths for red, green, and blue in the double-layered-type cell are more uniform than those of the wavelengths in the single-layered-type cell, so that a distinct black-and-white display image of the positive-display type can be attained. Moreover, the said double-layered-type cell has sharp threshold characteristics, so that the said cell can produce a display image with high contrast.

### Example 3

Inside the liquid-crystal cell layer with a voltage-applying means of each of the display devices in the above-mentioned examples, color (red, green, and blue) filter layers of the gelatin film are disposed. The display devices with the color filter layers are subjected to a multiplex drive, with the formation of a distinct, clear color image. These liquid-crystal display devices are useful for full-color display and multi-color display.

### Example 4

Liquid-crystal cells of this invention are used in place of a liquid-crystal panel with color filters that is provided with a TFT (Thin Film Transistor) as an active device, and are examined for color display tests by an active matrix drive. They produce a distinct and clear color image, so they are useful for full-color display and multi-color display.

It is understood that various other modifications will be apparent to and can be readily made by those skilled in the art without departing from the scope of this invention as defined by the appended claims.

## Claims

1. A positive-type liquid-crystal display device comprising:
a multi-layered-type liquid-crystal cell that includes first and second cell layers (C₁, C₂), the cell layers containing liquid-crystal molecules having a twisted nematic orientation therein;
the first cell layer (C₁) including a pair of transparent substrates (1, 1) opposing each other, a first pair of orientation films (3, 3) disposed on the inner surfaces of the transparent substrates (1, 1), the liquid-crystal molecules of the first cell layer, having a twisted nematic orientation therein, being provided between the first pair of the orientation films (3, 3), and a voltage-applying means which can vary the direction of the long molecular axis of each of the liquid-crystal molecules of the first cell layer;
the second cell layer (C₂) including a pair of transparent substrates (1, 1) opposing each other, and a second pair of orientation films (3, 3) disposed on the inner surfaces of the latter transparent substrates (1, 1), the liquid-crystal molecules of the second cell layer, having a twisted nematic orientation therein, being provided between the second pair of the orientation films (3, 3);
the direction of twist of the liquid-crystal molecules in the first cell layer (C₁) is the reverse of the direction of twist of the liquid-crystal molecules in the second cell layer (C₂); characterised in that
the angle of the twist of the liquid-crystal molecules in the first cell layer (C₁) and the angle of the twist of the liquid-crystal molecules in the second cell layer (C₂) are both in the range of 180° to 360°; and
the angle formed between the orientation direction, along the surface of the orientation film (3), of the longer axes of the liquid-crystal molecules which are nearest to the surface of that orientation film (3) of the first cell layer (C₁) which is nearest to the second cell layer (C₂) and the orientation direction, along the surface of the orientation film (3), of the longer axes of the liquid-crystal molecules which are nearest to the surface of that orientation film (3) of the second cell layer (C₂) which is nearest to the first cell layer (C₁), lies between 70° and 80° or between 110° and 150°.

2. A liquid-crystal display device according to claim 1, wherein the said angle between the orientation directions lies between 120° and 150°.

3. A liquid-crystal display device according to claim 1, wherein the angles of twist of the liquid-crystal molecules in the first and second cell layers (C₁, C₂) are nearly equal to each other, and the product Δn₁.d₁ of the birefringence Δn₁ and the thickness d₁ of the liquid-crystal layer in the first cell layer (C₁) and the product Δn₂.d₂ of the birefringence Δn₂ and the thickness d₂ of the liquid-crystal layer in the second cell layer (C₂) are represented by the following inequality:$\text{0.7·Δn₂.d₂ < Δn₁.d₁ <1.4 .Δn₂.d₂}$

4. A liquid-crystal display device according to claim 1, wherein the relationship between the pitch p of twist of the liquid-crystal molecules in the first cell layer (C₁) and the thickness d of the liquid-crystal layer in the first cell layer (C₁) is as follows$\text{ϑ/2π - 1/4 < d/p ≲ ϑ/2π,}$ wherein Θ is the angle of twist of the liquid-crystal molecules.

5. A liquid-crystal display device according to any one of the preceding claims 1 to 4, wherein a colour filter layer is disposed in at least one of the first and second cell layers (C₁, C₂).

6. A liquid-crystal display device according to one of the preceding claims 1 to 5, wherein the first cell layer contains picture elements and wherein an active device is disposed on each said picture element.

## Patentansprüche

1. Flüssigkristall-Anzeigevorrichtung vom Positivtyp mit:
- einer mehrschichtigen Flüssigkristallzelle, die eine erste und eine zweite Zellenschicht (C₁, C₂) beinhaltet, wobei die Zellenschichten Flüssigkristallmoleküle mit verdrilltnematischer Ausrichtung enthalten;
- wobei die erste Zellenschicht (C₁) ein Paar transparente Substrate (1, 1), die einander gegenüberstehen, ein erstes Paar Ausrichtfilme (3, 3), die auf den Innenseiten der transparenten Substrate (1, 1) ausgebildet sind, wobei die Flüssigkristallmoleküle der ersten Zellenschicht mit verdrillt-nematischer Ausrichtung zwischen dem ersten Paar Ausrichtfilme (3, 3) angeordnet sind, und eine Spannungsanlegeeinrichtung enthält, die die Richtung der langen Molekülachsen jedes der Flüssigkristallmoleküle der ersten Zellenschicht ändern kann;
- wobei die zweite Zellenschicht (C₂) ein Paar transparente Substrate (1, 1), die einander gegenüberstehen, und ein zweites Paar Ausrichtfilme (3, 3) enthält, die auf den Innenseiten der letzteren transparenten Substrate (1, 1) ausgebildet sind, wobei die Flüssigkristallmoleküle der zweiten Zellenschicht, die verdrillt-nematische Ausrichtung aufweist, zwischen dem zweiten Paar Ausrichtfilme (3, 3) vorhanden ist;
- wobei die Verdrillungsrichtung der Flüssigkristallmoleküle in der ersten Zellenschicht (C₁) umgekehrt zur Verdrillungsrichtung der Flüssigkristallmoleküle in der zweiten Zellenschicht (C₂) ist;
**dadurch gekennzeichnet, daß**
- sowohl der Verdrillungswinkel der Flüssigkristallmoleküle in der ersten Zellenschicht (C₁) als auch der Verdrillungswinkel der Flüssigkristallmoleküle in der zweiten Zellenschicht (C₂) im Bereich von 180° bis 360° liegen und
- der Winkel, der zwischen der Ausrichtungsrichtung entlang der Oberfläche des Ausrichtfilms (3) der längeren Achse der Flüssigkristallmoleküle, die der Oberfläche dieses Ausrichtfilms (3) der ersten Zellenschicht (C₁) am nächsten liegen, die der zweiten Zellenschicht (C₂) am nächsten liegt, und der Ausrichtungsrichtung entlang der Oberfläche des Ausrichtungsfilms (3) der längeren Achse der Flüssigkristallmoleküle, die der Oberfläche dieses Ausrichtfilms (3) der zweiten Zellenschicht (C₂) am nächsten liegen, die der ersten Zellenschicht (C₁) am nächsten liegt, zwischen 70° und 80° oder zwischen 110° und 150° liegt.

2. Flüssigkristall-Anzeigevorrichtung nach Anspruch 1, bei der der Winkel zwischen den Ausrichtungsrichtungen zwischen 120° und 150° liegt.

3. Flüssigkristall-Anzeigevorrichtung nach Anspruch 1, bei der die Verdrillungswinkel der Flüssigkristallmoleküle in der ersten und zweiten Zellenschicht (C₁, C₂) einander nahezu gleich sind und das Produkt Δn₁·d₁ aus der Doppelbrechung Δn₁ und der Dicke d₁ der Flüssigkristallschicht in der ersten Zellenschicht (C₁) sowie das Produkt Δn₂·d₂ aus der Doppelbrechung Δn₂ und der Dicke d₂ der Flüssigkristallschicht in der zweiten Zellenschicht (C₂) durch die folgende Ungleichung repräsentiert sind:$\text{0,7·Δn₂·d₂ < Δn₁·d₁ < 1,4·Δn₂·d₂}$

4. Flüssigkristall-Anzeigevorrichtung nach Anspruch 1, bei der die Beziehung zwischen der Ganghöhe p der Verdrillung der Flüssigkristallmoleküle in der ersten Zellenschicht (C₁) und der Dicke d der Flüssigkristallschicht in der ersten Zellenschicht (C₁) die folgende ist:$\text{Θ/2π - 1/4 < d/p <≈ Θ/2π,}$ wobei Θ der Verdrillungswinkel der Flüssigkristallmoleküle ist.

5. Flüssigkristall-Anzeigevorrichtung nach einem der vorstehenden Ansprüche 1 bis 4, bei der eine Farbfilterschicht in mindestens einer Schicht der ersten und zweiten Zellenschicht (C₁, C₂) angeordnet ist.

6. Flüssigkristall-Anzeigevorrichtung nach einem der vorstehenden Ansprüche 1 bis 5, bei der die erste Zellenschicht Bildelemente enthält und bei der ein aktives Bauteil an jedem Bildelement angeordnet ist.

## Revendications

1. Dispositif d'affichage à cristaux liquides de type positif comportant:
une cellule à cristaux liquides de type multicouches qui comprend des première et seconde couches de cellule (C₁, C₂), les couches de cellule renfermant des molécules de cristaux liquides présentant une orientation nématique en hélice;
la première couche de cellule (C₁) comprenant une paire de substrats transparents (1, 1)) en regard l'un de l'autre, une première paire de films d'orientation (3, 3) disposés sur la surface interne des substrats transparents (1, 1), les molécules de cristaux liquides de la première couche de cellule, présentant une orientation nématique en hélice, étant prévues entre les films (3, 3) de la première paire de films d'orientation, et un moyen d'application de tension qui est apte à faire varier la direction de l'axe moléculaire long de chacune des molécules de cristaux liquides de la première couche de cellule;
la seconde couche de cellule (C₂) comprenant une paire de substrats transparents (1, 1) en regard l'un de l'autre, et une seconde paire de films d'orientation (3, 3) disposés sur les surfaces internes de ces derniers substrats (1, 1) transparents, les molécules de cristaux liquides de la seconde couche de cellule, présentant une orientation nématique en hélice, étant prévues entre les films de la seconde paire de films d'orientation (3, 3); et dans lequel
la direction de torsion des molécules de cristaux liquides de la première couche de cellule (C₁) est l'inverse de la direction de torsion des molécules de cristaux liquides de la seconde couche de cellule (C₂); caractérisé en ce que
l'angle de torsion des molécules de cristaux liquides de la première couche de cellule (C₁) et l'angle de torsion des molécules de cristaux liquides de la seconde couche de cellule (C₂) se situent tous les deux dans la plage comprise entre 180° et 360°; et
l'angle que forme, d'une part, la direction d'orientation, selon la direction de la surface du film d'orientation (3), des grands axes des molécules de cristaux liquides qui sont les plus proches de la surface de celui (3) des films d'orientation de la première couche de cellule (C₁) qui est le plus proche de la seconde couche de cellule (C₂) et, d'autre part, la direction d'orientation, selon la direction de la surface du film d'orientation (3), des grands axes des molécules de cristaux liquides qui sont les plus proches de la surface de celui (3) des films d'orientation de la seconde couche de cellule (C₂) qui est le plus proche de la première couche de cellule (C₁), est compris entre 70° et 80° ou entre 110° et 150°.

2. Dispositif d'affichage à cristaux liquides selon la revendication 1, dans lequel ledit angle formé par les directions d'orientation est compris entre 120° et 150°.

3. Dispositif d'affichage à cristaux liquides selon la revendication 1, dans lequel les angles de torsion des molécules de cristaux liquides des première et seconde couches de cellule (C₁, C₂) sont presque égaux l'un à l'autre, et le produit Δn₁·d₁ de la biréfringence Δn₁ et l'épaisseur d₁ de la couche de cristaux liquides de la première couche de cellule (C₁) et le produit Δn₂·d₂ de la biréfringence Δn₂ et l'épaisseur d₂ de la couche de cristaux liquides de la seconde couche de cellule (C₂) sont représentés par l'inégalité suivante:$\text{0,7· Δn₂·d₂ < Δn₁·d₁ < 1,4 Δn₂·d₂}$

4. Dispositif d'affichage à cristaux liquides selon la revendication 1, dans lequel la relation entre le pas p de torsion des molécules de cristaux liquides de la première couche de cellule (C₁) et l'épaisseur d de la couche de cristaux liquides de la première couche de cellule (C₁) est la suivante:$\text{Θ/2π - 1/4 < d/p ≲ Θ/2π}$ où Θ est l'angle de torsion des molécules de cristaux liquides.

5. Dispositif d'affichage à cristaux liquides selon l'une quelconque des revendications précédentes 1 à 4, dans lequel une couche à filtre coloré est disposée dans au moins une des première et seconde couches de cellule (C₁, C₂).

6. Dispositif d'affichage à cristaux liquides selon l'une quelconque des revendications précédentes 1 à 5, dans lequel la première couche de cellule contient des éléments d'image et dans lequel un dispositif actif est disposé sur chacun desdits éléments d'image.
